# EUROPÄISCHE PATENTSCHRIFT

(11) **EP 2 419 298 B1**
(45) Veröffentlichungstag und Bekanntmachung des Hinweises auf die Patenterteilung: **12.02.2014**
(21) Anmeldenummer: 10713219.3
(22) Anmeldetag: 09.04.2010
(51) Int. Cl.: B60R 15/02, B64D 11/02

(54) **WASSERVERSORGUNGSMODUL**
WATER SUPPLY MODULE
MODULE D'ALIMENTATION EN EAU

(30) Priorität: 16.04.2009 DE 102009017497; 16.04.2009 US 169822 P
(43) Veröffentlichungstag der Anmeldung: 22.02.2012
(73) Patentinhaber: Airbus Operations GmbH, 21129 Hamburg (DE)
(72) Erfinder: DANNENBERG, Andreas, 21629 Neu Wulmstorf (DE); FLASHAAR, Sebastian, 21256 Handeloh-Höckel (DE)
(74) Vertreter: Kopf, Korbinian Paul
(86) Internationale Anmeldenummer: PCT/EP2010/054722
(87) Internationale Veröffentlichungsnummer: WO 2010/118993

(56) Entgegenhaltungen:
- WO-A1-2004/071867
- DE-A1- 3 440 862
- DE-A1- 4 202 719
- DE-U1- 20 009 957
- US-A- 4 063 315
- US-A1- 2007 069 078

## Beschreibung

### Verwandte Anmeldungen

Die vorliegende Anmeldung beansprucht die Priorität der deutschen Patentanmeldung 10 2009 017 497.4 eingereicht am 16. April 2009 und der US-Provisional Application 61/169,822, eingereicht am 16. April 2009.

### Gebiete der Erfindung

Diese Erfindung betrifft das Wasserversorgungssystem von Transportmitteln wie etwa Flugzeugen, Zügen, Schiffen oder Wohnwagen. Insbesondere betrifft die Erfindung ein Wasserversorgungsmodul für ein Transportmittel mit dem Wasser an einen Wasserhahn abgegeben werden kann. Die Erfindung betrifft auch ein Einbausystem für ein Transportmittel mit einem Wasserversorgungsmodul, ein Verfahren zum Einbauen eines Wasserversorgungsmoduls in ein Transportmittel, die Verwendung eines Wasserversorgungsmoduls in einem Transportmittel und ein Transportmittel mit einem Wasserversorgungsmodul.

### Technischer Hintergrund

Normalerweise besitzen Transportmittel, mit denen längere Reisen durchgeführt werden, Küchen und Toiletten. In jeder Küche und jeder Toilette ist in der Regel ein Wasserhahn vorhanden, aus dem das Personal oder die Passagiere des Transportmittels Frischwasser beziehen können.

Aus der DE 4 202 719 A1 und der US 5 261 440 A sind ein Wasserversorgungssystem für ein Flugzeug mit mehreren Wasserhähnen bekannt.

Wasserhähne unterschiedlicher Bauart können sich durch ihre Anschlüsse unterscheiden oder auch in der Art ihres Betätigungsmittels, etwa einem Infrarotsensor oder einer Mischbatterie. Abhängig von der Art des Wasserhahns müssen daher unterschiedliche Leitungen verlegt werden. Bei den zu verlegenden Leitungen kann es sich nicht nur um Wasserleitungen verschiedener Bauart, sondern auch um Signalleitungen zwischen dem Betätigungsmittel des Wasserhahns und einer Steuerungseinheit handeln. Durch die über die Signalleitungen empfangenen Steuerbefehle kann die Steuerungseinheit die Abgabe von Wasser aus dem Wasserhahn, etwa über das Entsperren eines Ventils, steuern, siehe gattungsgemäße DE-U-200 09 957.

Wegen der sich unterscheidenden Leitungen für Wasserhähne unterschiedlicher Bauart muss vor dem Einbau des Wasserversorgungssystems bereits feststehen, welcher Wasserhahn an welcher Stelle eingesetzt wird. Daneben ist ein nachträgliches Umrüsten des Transportmittels in Bezug auf die Wasserhähne sehr aufwändig.

### Zusammenfassung der Erfindung

Es ist Aufgabe der Erfindung, den Einbau des Wasserversorgungssystems eines Transportmittels flexibler zu gestalten.

Gemäß einer Ausführungsform der Erfindung wird ein Wasserversorgungsmodul für ein Transportmittel bereitgestellt. Das Wasserversorgungsmodul umfasst einen Aufnahmeanschluss zum Aufnehmen von Wasser aus einer Versorgungsleitung, einen Abgabeanschluss zum Abgeben von Wasser an einen Wasserhahn, einen Steuerungsanschluss zum Empfangen von Steuerbefehlen eines Betätigungselements am Wasserhahn und eine Steuerungseinheit, wobei die Steuerungseinheit dazu ausgeführt ist, aufgrund von Steuerbefehlen des Betätigungselements die Abgabe von Wasser aus dem Abgabeanschluss an den Wasserhahn einzustellen und wobei das Wasserversorgungsmodul als Baugruppe ausgeführt ist.

Das Wasserversorgungsmodul als Baugruppe stellt eine integrierte bzw. kombinierte Wasserzuführung von beispielsweise einem Frischwassertank zu einem Wasserhahn dar. Die Basisfunktionen der Wasserzuführung können in einem einzelnen kompakten Gerät integriert werden, das unabhängig von der Ausführungsart des Wasserhahns im Transportmittel integriert werden kann.

Dadurch, dass das Wasserversorgungsmodul als Baugruppe ausgeführt ist, d. h. nur wenige getrennte Komponenten umfasst, kann es mit niedrigem Aufwand im Transportmittel befestigt oder installiert werden. Der Installationsaufwand für eine Baugruppe ist kleiner als wenn die einzelnen Bauteile der Baugruppe gesondert voneinander im Transportmittel installiert werden müssten.

Abhängig von der Ausführungsform des Wasserhahns bzw. dessen Betätigungselements können der Steuerungseinheit unterschiedliche Steuerbefehle übermittelt werden. Bei einem Wasserhahn mit Infrarotsensor als Betätigungselement könnten diese Steuerbefehle lediglich "Wasser ein" und "Wasser aus" umfassen. Bei einem Wasserhahn mit einer Mischbatterie oder einem Mischerhebel als Betätigungselement können diese Steuerbefehle daneben noch Informationen über die Menge des abzugebenden Wassers und die Temperatur des abzugebenden Wassers umfassen.

Im einfachsten Fall betätigt die Steuerungseinheit abhängig von den Steuerbefehlen des Betätigungselements ein Ventil, das den Abgabeanschluss entweder sperrt oder vollständig freigibt. Die Steuerungseinheit kann auch derart ausgeführt sein, dass sie die Steuerbefehle unterschiedlicher Betätigungselemente von Wasserhähnen verarbeiten kann.

Das Betätigungselement für den Wasserhahn kann direkt am Wasserhahn angebracht oder befestigt sein oder auch in der Nähe des Wasserhahns am Transportmittel oder einem Monument des Transportmittels angebracht sein.

Gemäß einer Ausführungsform ist das Wasserversorgungsmodul für ein Monument eines Transportmittels ausgeführt. Derartige Monumente umfassen beispielsweise Toilettenmonumente oder Küchenmonumente. Auf diese Weise ergibt sich ein modularer Aufbau, mit dem der Installationsaufwand für das Wasserversorgungssystem des Transportmittels besonders stark reduziert werden kann. Das Wasserversorgungsmodul kann bereits im Monument befestigt werden, bevor das Monument im Transportmittel befestigt wird.

Die Versorgungsleitung kann mit einem Wassertank verbunden sein, der beispielsweise innerhalb des Monuments vorhanden ist.

Gemäß einer Ausführungsform umfasst das Wasserversorgungsmodul einen Wasserheizer. Die Steuerungseinheit kann dazu ausgeführt sein, den Wasserheizer zu aktivieren, zu deaktivieren oder dessen Heizleistung einzustellen. Damit ist es möglich, dass das Wasserversorgungsmodul den Wasserhahn mit unterschiedlich temperiertem Wasser versorgen kann. Das Steuern des Wasserheizers durch die Steuerungseinheit kann dabei aufgrund von Steuerbefehlen des Betätigungsmittels erfolgen. Beispielsweise könnte mittels einer Mischbatterie Wasser einer bestimmten Temperatur angefordert werden. Die Steuerungseinheit könnte dann den Wasserheizer dahingehend einstellen, das Wasser auf eine bestimmte Temperatur zu erhitzen.

Gemäß einer Ausführungsform umfasst das Wasserversorgungsmodul ein Mischventil zum Mischen von erwärmtem und nicht erwärmtem Wasser, wobei die Steuerungseinheit dazu ausgeführt ist, aufgrund von Steuerbefehlen des Betätigungsmittels ein Mischverhältnis des Mischventils einzustellen. Dabei kann das dem Mischventil zugeführte Wasser aus dem Wasserheizer stammen. Mit einem Mischventil kann der Wasserheizer dahingehend ausgeführt sein, das Wasser nur auf eine bestimmte Temperatur zu erhitzen. Das Einstellen der gewünschten Wassertemperatur erfolgt dann mittels des Mischverhältnisses des Mischventils.

Gemäß einer weiteren Ausführungsform umfasst das Wasserversorgungsmodul eine Pumpe zum Fördern des Wassers zum Abgabeanschluss. Die Steuerungseinheit kann dazu ausgeführt sein, aufgrund von Steuerbefehlen des Betätigungsmittels die Pumpe zu aktivieren, zu deaktivieren oder deren Förderleistung einzustellen.

Eine Pumpe im Wasserversorgungsmodul hat den Vorteil einer erhöhten Redundanz innerhalb des Transportmittels. Wird lediglich eine einzige Pumpe zum Versorgen aller Wasserhähne des Transportmittels verwendet, führt das Versagen dieser Pumpe dazu, dass das Transportmittel umgehend gewartet werden muss. Das Transportmittel kann nicht mehr eingesetzt werden, was beispielsweise zu Verspätungen führen kann. Versagt lediglich eine einzelne Pumpe, beispielsweise in einem Toilettenmonument, so muss nur diese Toilette während der Reise still gelegt werden und die Wartung der Toilette kann später erfolgen.

Alternativ zu der Pumpe oder zusätzlich zu dieser kann das Wasserversorgungsmodul mit Druckluft oder Unterdruck versorgt werden und das Fördern des Wassers mittels der Druckluft oder dem Unterdruck erfolgen.

Gemäß einer Ausführungsform umfasst das Wasserversorgungsmodul einen Filter zum Filtern von Wasser, das vom Abgabeanschluss abgegeben wird.

Gemäß einer Ausführungsform umfasst das Wasserversorgungsmodul eine beispielsweise aktive Wasserbehandlungseinheit, mit der das Wasser z. B. mit Hilfe von UV-Strahlen bestrahlt werden kann.

Gemäß einer Ausführungsform umfasst das Wasserversorgungsmodul ein Absperrventil zum Schließen des Aufnahmeanschlusses. Das Wasserversorgungsmodul kann damit von der Versorgungsleitung getrennt werden. Wenn ein Fehler auftritt, beispielsweise eine Leckage, kann durch Schließen des Absperrventils das Modul vom Wassersystem getrennt werden.

Gemäß einer weiteren Ausführungsform umfasst das Wasserversorgungsmodul ein Trägerelement, wobei Bauelemente des Wasserversorgungsmoduls an dem Trägerelement befestigt sind, wobei das Trägerelement dazu ausgeführt ist, am Transportmittel befestigt zu werden.

Bei den Bauelementen des Wasserversorgungsmoduls kann es sich um die Steuerungseinheit, den Aufnahmeanschluss, den Abgabeanschluss, den Steuerungsanschluss, den Wasserheizer, das Mischventil, den Filter, und das Absperrventil handeln.

Zum Installieren des Wasserversorgungsmoduls im Transportmittel müssen nicht mehr die einzelnen Bauelemente am Transportmittel befestigt werden, sondern lediglich das Trägerelement.

Bei dem Trägerelement kann es sich um eine Trägerplatte oder um ein gemeinsames Gehäuse für die Bauelemente handeln.

Gemäß einer Ausführungsform kann das Trägerelement dazu ausgeführt sein, an oder in einem Monument befestigt zu werden.

Gemäß einer Ausführungsform wird ein Wasserversorgungsmodul bereitgestellt, bei dem Abgabeanschluss und Steuerungsanschluss in einem gemeinsamen Modul-Standardanschluss integriert sind. Damit kann das Anschließen des Wasserhahns am Wasserversorgungsmodul in einem einzigen Arbeitsschritt erledigt werden. Der Modul-Standardanschluss kann auch zum mechanischen Befestigen des Wasserhahns am Wasserversorgungsmodul verwendet werden.

Die Erfindung betrifft auch ein Einbausystem für ein Transportmittel. Das Einbausystem umfasst das Wasserversorgungsmodul und wenigstens zwei Wasserhähne unterschiedlicher Bauart, wobei jeder der wenigstens zwei Wasserhähne dazu ausgeführt ist, mit dem Abgabeanschluss und dem Steuerungsanschluss verbunden zu werden.

Die unterschiedliche Bauart der Wasserhähne kann sich dabei entweder auf die Wasseranschlüsse oder auch auf die Betätigungsart des Wasserhahns beziehen. Unabhängig davon, ob ein funktionaler Wasserhahn für eine Küche mit lediglich Kaltwasser oder ein optisch ansprechender Wasserhahn für die 1. Klasse aus dem Einbausystem gewählt wird oder ob das Betätigungselement am Wasserhahn ein Infrarotsensor ist oder eine aufwändige Mischbatterie, mit der die Menge und die Temperatur des abzugebenden Wassers eingestellt werden kann, kann die Installation der verschiedenen Wasserhähne mit dem gleichen Wasserversorgungsmodul bewerkstelligt werden.

Gemäß einer Ausführungsform wird ein Einbausystem bereitgestellt, wobei jeder der wenigstens zwei Wasserhähne unterschiedlicher Bauart einen Wasserhahn-Standardanschluss aufweist, wobei der Wasserhahn-Standardanschluss dazu ausgeführt ist, den Wasserhahn mit dem Modul-Standardanschluss zu verbinden.

Die Erfindung betrifft auch ein Verfahren zum Einbauen eines Wasserversorgungsmoduls in ein Transportmittel, das die folgenden Schritte umfasst: Befestigen des als Baugruppe ausgeführten Wasserversorgungsmoduls an dem Transportmittel, Anschließen des Versorgungsanschlusses an die Versorgungsleitung, Anschließen des Wasserhahns an den Abgabeanschluss, Anschießen des Wasserhahns an das Betätigungsmittel des Wasserhahns.

Mit wenigen einfachen Arbeitsschritten kann ein funktionstüchtiger Wasserhahn im Transportmittel installiert werden.

Gemäß einer Ausführungsform des Verfahrens umfasst das Befestigen des Wasserversorgungsmoduls an dem Transportmittel ein Befestigen eines Trägerelements des Wasserversorgungsmoduls am Transportmittel.

Gemäß einer Ausführungsform des Verfahrens erfolgt das Anschließen des Wasserhahns am Abgabeanschluss und des Betätigungsmittels am Steueranschluss in einem einzigen Schritt durch Anschließen des Wasserhahns an einem Modul-Standardanschluss.

Die Erfindung betrifft auch die Verwendung des Wasserversorgungsmoduls in einem Transportmittel oder die Verwendung des Wasserversorgungsmoduls in einem Monument eines Transportmittels.

Die Erfindung betrifft auch ein Transportmittel mit dem Wasserversorgungsmodul.

Die Erfindung wird nachfolgend mit Bezug auf die beiliegenden Figuren anhand von Ausführungsformen detailliert beschrieben.

### Kurze Beschreibung der Figuren

Fig. 1 zeigt eine perspektivische Ansicht eines Wasserversorgungsmoduls gemäß einer Ausführungsform der Erfindung.
Fig. 2a zeigt eine perspektivische Ansicht einer Ausführungsform eines Wasserhahns.
Fig. 2b zeigt eine perspektivische Ansicht einer weiteren Ausführungsform eines Wasserhahns.
Fig. 3 zeigt eine schematische Ansicht einer weiteren Ausführungsform eines Wasserversorgungsmoduls.
Fig. 4 zeigt ein Flugzeug mit einem Einbausystem gemäß einer Ausführungsform der Erfindung.
Fig. 5 zeigt ein Flussdiagramm, wie das Einbauen eines Wasserversorgungsmoduls in ein Transportmittel erfolgen kann.

### Detaillierte Beschreibung der Ausführungsbeispiele

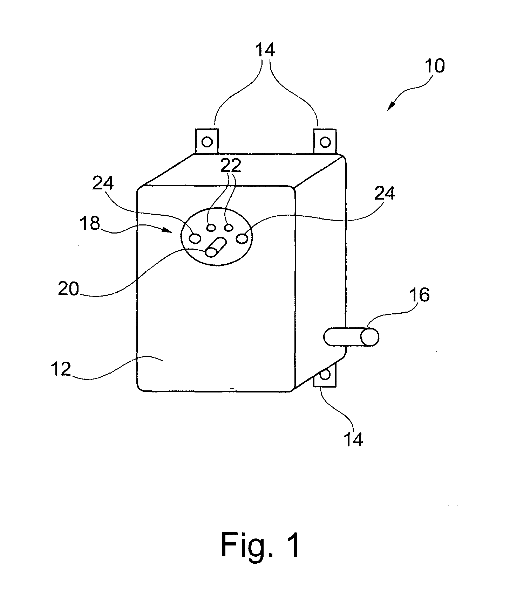

Fig. 1 zeigt eine perspektivische Ansicht einer Ausführungsform eines Wasserversorgungsmoduls. Das Wasserversorgungsmodul 10 weist ein Gehäuse 12 auf, das mit Befestigungselementen 14 an einem Transportmittel bzw. an einem Monument des Transportmittels befestigt werden kann. Die Befestigungselemente 14 sind beispielsweise im Bereich der rückseitigen Ecken des Wasserversorgungsmoduls 10 angeordnet und weisen jeweils ein Loch zur Aufnahme eines Befestigungsstiftes, Bolzens oder eine Schraube auf. Innerhalb des Gehäuses 12 sind die Komponenten des Wasserversorgungsmoduls 10 angeordnet. Das Wasserversorgungsmodul 10 weist einen Aufnahmeanschluss 16 auf, der an die Versorgungsleitung zu einem Wassertank angeschlossen werden kann.

Weiter umfasst das Wasserversorgungsmodul 10 einen Modul-Standardanschluss 18, in dem ein Abgabeanschluss 20, zwei Steuerungsanschlüsse 22, beispielsweise Anschlüsse für Leistungs- und Datenübertragung, und zwei Befestigungsmöglichkeiten 24, beispielsweise Schraubgewinde oder Snap-and-click-Verbindungselemente, für einen Wasserhahn vorgesehen sind.

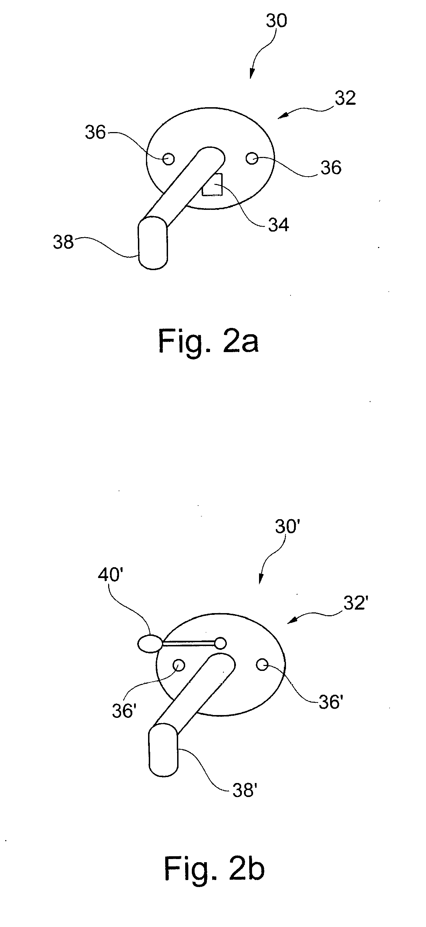

Die Fig. 2a zeigt einen Wasserhahn 30, der mit dem Modul-Standardanschluss 18 verbunden werden kann. Dazu weist der Wasserhahn 30 den Wasserhahn-Standardanschluss 32 auf. Der Wasserhahn 30 besitzt ein Endrohr 38, das mit dem Abgabeanschluss 20 des Wasserversorgungsmoduls 10 verbunden werden kann und einen Infrarotsensor 34, der über einen der Steuerungsanschlüsse 22 Steuerungsbefehle an eine Steuerungseinheit im Wasserversorgungsmodul 10 abgeben kann.

Zum Verbinden des Wasserhahns 30 mit dem Wasserversorgungsmodul 10 wird der Wasserhahn 30 auf den Modul-Standardanschluss 18 gesteckt und beispielsweise mittels Schrauben durch die Öffnung 36 mit dem Wasserversorgungsmodul 10 verbunden.

Ist der Wasserhahn 30 installiert, kann eine Person ihre Hände vor den Infrarotsensor 34 halten und der Infrarotsensor 34 sendet einen entsprechenden Steuerbefehl an eine Steuerungseinheit innerhalb des Versorgungsmoduls 10, die dann die Abgabe des Wassers durch das Endrohr 38 veranlasst.

Die Fig. 2b zeigt eine weitere Ausführungsform eines Wasserhahns 30', der mit dem Modul-Standardanschluss 18 verbunden werden kann. Dazu weist der Wasserhahn 30' einen zum Wasserhahn-Standardanschluss 32 identischen Wasserhahn-Standardanschluss 32 auf. Der Wasserhahn 30' weist ein Endrohr 38' und zwei Öffnungen 36' zum Verbinden des Wasserhahns 30' mit dem Wasserversorgungsmodul 10 auf.

Im Gegensatz zu der in der Fig. 2a gezeigten Ausführungsform eines Wasserhahns 30 weist der in der Fig. 2b gezeigte Wasserhahn 30' einen Mischhebel 40' auf. Der Mischhebel 40' kann als Betätigungsmittel mit den Steuerungsanschlüssen 22 des Wasserversorgungsmoduls 10 verbunden werden. Durch Stellen des Mischhebels 40' in unterschiedliche Stellungen werden Steuerbefehle über die Stellung des Mischhebels 40 an eine Steuerungseinheit des Wasserversorgungsmoduls 10 gesendet, die Informationen über die Temperatur und die Menge des abzugebenden Wassers enthalten.

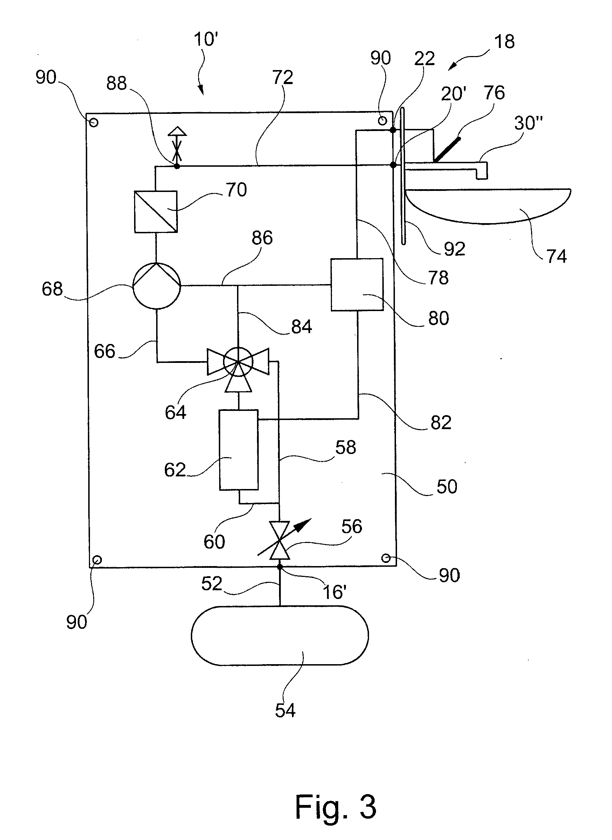

Die Fig. 3 zeigt eine weitere Ausführungsform eines Wasserversorgungsmoduls 10' in schematischer Form. Alle Komponenten des Wasserversorgungsmoduls 10' können in dem Wasserversorgungsmodul 10 aus der Fig. 1 enthalten sein.

Die Bauelemente des Wasserversorgungsmoduls 10' sind auf einem Trägerelement 50 in der Form einer Trägerplatte befestigt. Das Wasserversorgungsmodul 10' umfasst einen Aufnahmeanschluss 16', über den das Wasserversorgungsmodul 10' über eine Versorgungsleitung 52 aus einem Frischwassertank 54 mit Wasser versorgt werden kann. Stromabwärts des Aufnahmeanschlusses 16' umfasst das Wasserversorgungsmodul 10' ein Absperrventil 56, mit dem der Aufnahmeanschluss 16' beispielsweise manuell verschlossen werden kann. Die aus dem Absperrventil 56 führende Wasserleitung teilt sich in zwei Wasserleitungen 58 und 60, mit denen das Wasser aus dem Tank 54 einem Wasserheizer 62 und einem Mischventil 64 zugeführt werden kann. Das Mischventil 64 mischt das aus dem Wasserheizer 62 und der Leitung 58 stammende Wasser, um es einer weiteren Leitung 66 zuzuführen, die zu einer optionalen Pumpe 68 führt. Das von der Pumpe geförderte Wasser durchläuft einen Filter 70 und wird über eine Leitung 72 dem Abgabeanschluss 20' zugeführt. Ein Wasserhahn 30" ist mit dem Abgabeanschluss 20' verbunden. Das aus dem Wasserhahn 30" fließende Wasser kann in einem Becken 74 gesammelt werden, das wiederum mit dem Abwassersystem des Transportmittels verbunden ist.

Das Betätigungsmittel 76 des Wasserhahns 30" ist über den Steuerungsanschluss 22 und eine Signalleitung 78 mit einer Steuerungseinheit 80 des Wasserversorgungsmoduls 10' verbunden. Die Steuerungseinheit 80 wiederum ist über eine Signalleitung 82 mit dem Heizelement 62 über eine Signalleitung 84 mit Mischventil 64 und über eine Signalleitung 86 mit der Pumpe 68 verbunden. Abhängig von den Steuerbefehlen, die die Steuerungseinheit 80 über die Signalleitung 78 erhält, steuert die Steuerungseinheit 80 den Wasserheizer 62, das Mischventil 64 und die Pumpe 68.

Ist das Betätigungselement 76 beispielsweise ein Mischerhebel und wird der Hebel etwas nach oben geschoben, so aktiviert die Steuerungseinheit 80 das Wasserheizer 62 und die Pumpe 68, die dann beginnt, Wasser vom Tank 54 an Abgabeanschluss 20' zu fördern. Abhängig von der Stellung des Mischhebels 76 steuert die Steuerungseinrichtung 80 das Mischventil 64 derart, dass das das Mischventil 64 verlassende Wasser in der Leitung 66, das einerseits über die Leitung 58 direkt aus dem Tank 54 stammt und das andererseits über die Leitung 60 den Wasserheizer 62 durchlaufen hat und auf eine bestimmte Temperatur erhitzt wurde, die durch die Stellung des Mischerhebels 76 gewünschte, vorgegebene Temperatur aufweist.

Das in der Fig. 3 dargestellte Wasserversorgungsmodul 10' weist außerdem zwischen dem Abgabeanschluss 20' und dem Filter 70 ein Entlüftungsventil 88 auf.

Die Trägerplatte 50 kann über die Befestigungselemente 90 in Form von Löchern mittels beispielsweise Schrauben am Transportmittel oder an einem Monument des Transportmittels befestigt werden.

Für das in der Fig. 3 dargestellte Wasserversorgungsmodul 10' ist eine Blende 92 vorgesehen, mit der die Baugruppen hinter dem Wasserhahn 30' abgedeckt werden können, so dass sie beispielsweise für einen Passagier des Transportmittels nicht sichtbar sind.

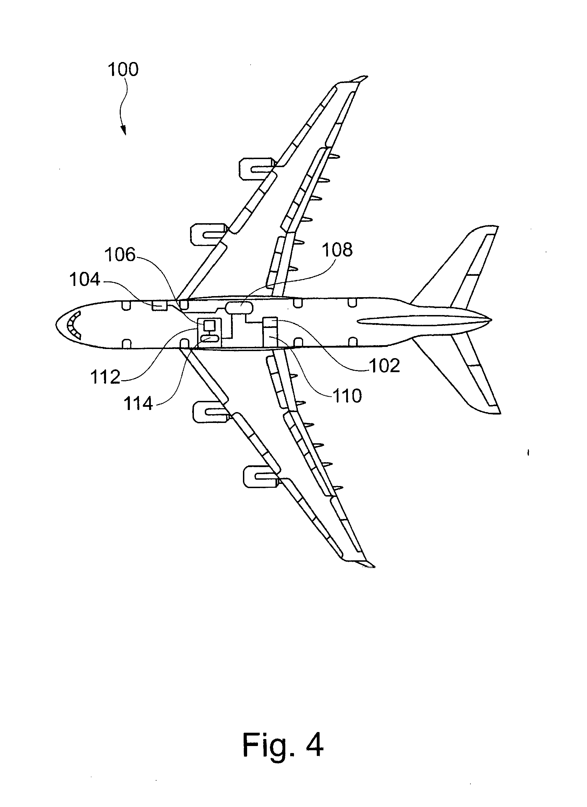

Die Fig. 4 zeigt ein Flugzeug 100 in Draufsicht, in das schematisch ein Teil des Wasserversorgungssystems eingezeichnet ist. Die Wasserversorgungsmodule 102 und 104 sind direkt bzw. das Wasserversorgungsmodul 106 indirekt mit einem zentralen Frischwassertank 108 über Leitungen verbunden. Das Wasserversorgungsmodul 102 ist an einem Küchenmonument 110 befestigt, das wiederum am Flugzeug 100 befestigt ist. Das Wasserversorgungsmodul 106 ist in einem Toilettenmonument 112 befestigt, das mit dem Flugzeug 100 verbunden ist. Das Toilettenmonument 112 weist einen separaten Frischwassertank 114 auf, der über eine Leitung mit dem zentralen Frischwassertank 108 des Flugzeugs 100 verbunden ist. Das Wasserversorgungsmodul 106 bezieht sein Wasser aus dem Tank 114 des Toilettenmonuments 112.

Das Wasserversorgungsmodul 104 ist direkt am Flugzeug 100 befestigt.

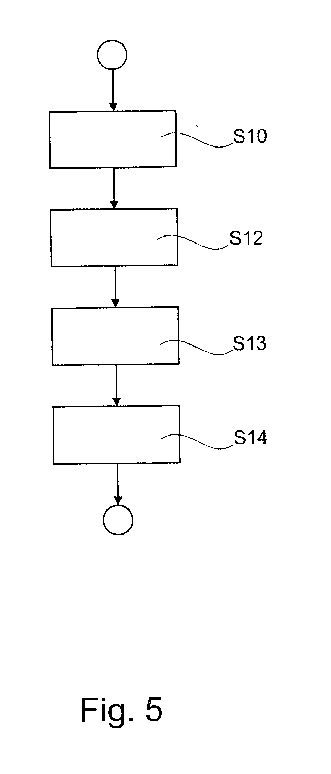

Die Fig. 5 zeigt ein Flussdiagramm, wie eines der Wasserversorgungsmodule 10 oder 10' in das Flugzeug 100 eingebaut werden kann.

Im Schritt S10 wird das Gehäuse 12 bzw. die Trägerplatte 50 am Flugzeug 100 oder einem Monument befestigt. Der Einbau des Moduls kann wahlweise im Monument bei einem Monumentenhersteller erfolgen oder später direkt im Flugzeug. Das ist abhängig von der Einbausituation im Flugzeug.

Im Schritt S12 wird der Aufnahmeanschluss 16 oder 16' über eine Versorgungsleitung 52 mit einem der Tanks 54, 114 oder 108 verbunden. Im Schritt S13 wird der Wasserhahn 30 oder 30' mit seinem Wasserhahn-Standardanschluss 32 bzw. 32' auf den Standardanschluss 18 des Wasserversorgungsmoduls 10 bzw. 10' gesteckt. Im Schritt S14 wird der Wasserhahn 30 bzw. 30' am Wasserversorgungsmodul 10 bzw. 10' befestigt, beispielsweise mit Hilfe von Schrauben oder einer Schnappverbindung.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Wasserversorgungsmodul (10, 10') für ein Transportmittel (100), umfassend:
einen Aufnahmeanschluss (16, 16') zum Aufnehmen von Wasser aus einer Versorgungsleitung;
einen Abgabeanschluss (20, 20') zum Abgeben von Wasser an einen Wasserhahn;
einen Steuerungsanschluss (22, 22') zum Empfangen von Steuerbefehlen eines Betätigungselements am Wasserhahn; und
eine Steuerungseinheit (80);
wobei die Steuerungseinheit dazu ausgeführt ist, aufgrund von Steuerbefehlen des Betätigungselements die Abgabe von Wasser aus dem Abgabeanschluss an den Wasserhahn einzustellen;
wobei das Wasserversorgungsmodul (10, 10') als Baugruppe ausgeführt ist;
wobei Abgabeanschluss und Steuerungsanschluss in einem gemeinsamen Modul-Standardanschluss (18) integriert sind, so dass das Anschließen des Wasserhahns am Abgabeanschluss und das Anschließen des Betätigungsmittels des Wasserhahns am Steuerungsanschluss in einem einzigen Schritt durch Anschließen des Wasserhahns an dem Modul-Standardanschluss erfolgen kann.

2. Wasserversorgungsmodul (10, 10') nach Anspruch 1, weiter umfassend:
einen Wasserheizer (62);
wobei die Steuerungseinheit (80) dazu ausgeführt ist, den Wasserheizer (62) zu aktivieren, zu deaktivieren oder dessen Heizleistung einzustellen.

3. Wasserversorgungsmodul (10, 10') nach Anspruch 1 oder 2, weiter umfassend:
ein Mischventil (64) zum Mischen von erwärmten und nicht erwärmten Wasser;
wobei die Steuerungseinheit (80) dazu ausgeführt ist, aufgrund von Steuerbefehlen des Betätigungsmittels ein Mischverhältnis des Mischventils (64) einzustellen.

4. Wasserversorgungsmodul (10, 10') nach einem der vorhergehenden Ansprüche, weiter umfassend:
eine Pumpe (68) zum Fördern des Wassers zum Abgabeanschluss;
wobei die Steuerungseinheit (80) dazu ausgeführt ist, aufgrund von Steuerbefehlen des Betätigungsmittels die Pumpe (68) zu aktivieren, zu deaktivieren oder deren Förderleistung einzustellen.

5. Wasserversorgungsmodul (10, 10') nach einem der vorhergehenden Ansprüche, weiter umfassend:
einen Filter (70) zum Filtern von Wasser, das vom Abgabeanschluss abgegeben wird.

6. Wasserversorgungsmodul (10, 10') nach einem der vorhergehenden Ansprüche, weiter umfassend:
ein Absperrventil (56) zum Schließen des Aufnahmeanschlusses.

7. Wasserversorgungsmodul (10, 10') nach einem der vorhergehenden Ansprüche, weiter umfassend:
ein Trägerelement (12, 50),
wobei Bauelemente des Wasserversorgungsmoduls an dem Trägerelement befestigt sind,
wobei das Trägerelement dazu ausgeführt ist, am Transportmittel (100) befestigt zu werden.

8. Einbausystem für ein Transportmittel, umfassend:
ein Wasserversorgungsmodul (10, 10') nach einem der Ansprüche 1 bis 7, und
wenigstens zwei Wasserhähne (30, 30') unterschiedlicher Bauart,
wobei jeder der wenigstens zwei Wasserhähne dazu ausgeführt ist, mit dem Abgabeanschluss und dem Steuerungsanschluss verbunden zu werden.

9. Einbausystem für ein Transportmittel nach Anspruch 8 mit einem Wasserversorgungsmodul (10, 10') nach einem der Ansprüche 1 bis 7,
wobei jeder der wenigstens zwei Wasserhähne (30, 30') unterschiedlicher Bauart einen Wasserhahn-Standardanschluss (32, 32') aufweist,
wobei der Wasserhahn-Standardanschluss dazu ausgeführt ist, den Wasserhahn mit dem Modul-Standardanschluss zu verbinden.

10. Verfahren zum Einbauen eines Wasserversorgungsmoduls (10, 10') in ein Transportmittel, umfassend die Schritte:
Befestigen des als Baugruppe ausgeführten Wasserversorgungsmoduls (10, 10') an dem Transportmittel;
Anschließen des Aufnahmeanschlusses an die Versorgungsleitung;
Anschließen des Wasserhahns an dem Abgabeanschluss;
Anschließen des Betätigungsmittel des Wasserhahns an einem Steuerungsanschluss;
wobei das Anschließen des Wasserhahns am Abgabeanschluss und das Anschließen des Betätigungsmittels am Steuerungsanschluss in einem einzigen Schritt durch Anschließen des Wasserhahns an einem Modul-Standardanschluss erfolgen.

11. Verfahren nach Anspruch 10, wobei das Befestigen des Wasserversorgungsmoduls (10, 10') an dem Transportmittel ein Befestigen eines Trägerelements des Wasserversorgungsmoduls am Transportmittel umfasst.

12. Verwendung eines Wasserversorgungsmoduls (10, 10') nach einem der Ansprüche 1 bis 7 in einem Transportmittel (100).

13. Transportmittel (100) mit einem Wasserversorgungsmodul (10, 10') nach einem der Ansprüche 1 bis 7.

## Claims

1. Water supply module (10, 10') for a means of transport, comprising:
- a receiving terminal (16, 16') for receiving water from a supply line;
- an output terminal (20, 20') for outputting water to a tap;
- a control terminal (22, 22') for receiving control commands of an actuation element at the tap; and
- a control unit (80);
wherein the control unit is configured so as to set the output of water from the output terminal to the tap on the basis of control commands of the actuation element; wherein the water supply module (10, 10') is configured as an assembly;
wherein the output terminal and the control terminal are integrated into a shared module standard terminal (18) in such a way that the tap can be connected to the output terminal and the actuation means of the tap can be connected to the control terminal in a single step by connecting the tap to the module standard terminal.

2. Water supply module (10, 10') according to claim 1, further comprising:
- a water heater (62);
wherein the control unit (80) is configured so as to activate or deactivate the water heater (62) or set the heating power thereof.

3. Water supply module (10, 10') according to either claim 1 or claim 2, further comprising:
- a mixing valve (64) for mixing heated and unheated water;
wherein the control unit (80) is configured so as to set a mixing ratio of the mixing valve (64) on the basis of control commands of the actuation means.

4. Water supply module (10, 10') according to any one of the preceding claims, further comprising:
- a pump (68) for conveying the water to the output terminal;
wherein the control unit (80) is configured so as to activate or deactivate the pump (68) or set the conveying power thereof on the basis of control commands of the actuation means.

5. Water supply module (10, 10') according to any one of the preceding claims, further comprising:
- a filter (70) for filtering water which is outputted from the output terminal.

6. Water supply module (10, 10') according to any one of the preceding claims, further comprising:
- a cut-off valve (56) for closing the receiving terminal.

7. Water supply module (10, 10') according to any one of the preceding claims, further comprising:
- a support element (12, 50),
wherein components of the water supply module are fixed to the support element,
wherein the support element is configured so as to be fixed to the means of transport (100).

8. Installation system for a means of transport, comprising
- a water supply module (10, 10') according to any one of claims 1 to 7, and
- at least two taps (30, 30') of different construction,
wherein each of the at least two taps is configured so as to be connected to the output terminal and the control terminal.

9. Installation system for a means of transport according to claim 8 comprising a water supply module (10, 10') according to any one of claims 1 to 7,
wherein each of the at least two taps (30, 30') of different construction comprises a tap standard terminal (32, 32'),
wherein the tap standard terminal is configured so as to connect the tap to the module standard terminal.

10. Method for installing a water supply module (10, 10') in a means of transport, comprising the steps of:
- fixing the water supply module (10, 10') in the form of an assembly to the means of transport;
- connecting the receiving terminal to the supply line;
- connecting the tap to the output terminal;
- connecting the actuation means of the tap to a control terminal;
wherein the tap is connected to the output terminal and the actuation means of the tap is connected to the control terminal in a single step by connecting the tap to a module standard terminal.

11. Method according to claim 10, wherein fixing the water supply module (10, 10') to the means of transport comprises fixing a support element of the water supply module to the means of transport.

12. Use of a water supply module (10, 10') according to any one of claims 1 to 7 in a means of transport (100).

13. Means of transport (100) comprising a water supply module (10, 10') according to any one of claims 1 to 7.

## Revendications

1. Module d'alimentation en eau (10, 10') pour un moyen de transport (100), comprenant :
- un raccordement d'alimentation (16, 16') pour recevoir de l'eau par une conduite d'alimentation ;
- un raccordement de fourniture (20, 20') pour fournir de l'eau à un robinet d'eau ;
- un raccordement de commande (22, 22') pour recevoir des instructions de commande d'un élément d'actionnement sur le robinet d'eau ; et
- une unité de commande (80) ;
dans lequel l'unité de commande est réalisée, en fonction d'instructions de commande de l'élément d'actionnement, pour couper la fourniture d'eau par le raccordement de fourniture vers le robinet d'eau ;
dans lequel le module d'alimentation en eau (10, 10') est réalisé sous la forme d'un bloc ;
dans lequel le raccordement de fourniture et le raccordement de commande sont intégrés dans un raccordement standard modulaire (18) commun, de telle sorte que le raccordement du robinet d'eau sur le raccordement de fourniture et le raccordement du moyen d'actionnement du robinet d'eau sur le raccordement de commande peuvent avoir lieu en une étape unique en raccordant le robinet d'eau sur le raccordement standard modulaire.

2. Module d`alimentation en eau (10, 10') selon la revendication 1, comprenant en outre :
- un chauffe-eau (62) ;
dans lequel l'unité de commande (80) est réalisée pour activer, désactiver le chauffe-eau (62) ou régler sa puissance calorifique.

3. Module d'alimentation en eau (10, 10') selon la revendication 1 ou 2, comprenant en outre :
- une valve de mélange (64) pour mélanger l'eau chauffée et non chauffée ;
dans lequel l'unité de commande (80) est réalisée, en fonction d'instructions de commande du moyen d'actionnement, pour régler un rapport de mélange de la valve de mélange (64).

4. Module d'alimentation en eau (10, 10') selon l'une des revendications précédentes, comprenant en outre :
- une pompe (68) pour transporter l'eau vers le raccordement de sortie ;
dans lequel l'unité de commande (80) est réalisée, en fonction d'instructions de commande de l'élément d'actionnement, pour activer ou désactiver la pompe (68) ou régler son débit.

5. Module d'alimentation en eau (10, 10') selon l'une des revendications précédentes, comprenant en outre :
- un filtre (70) pour filtrer l'eau qui est fournie par le raccordement de sortie.

6. Module d'alimentation en eau (10, 10') selon l'une des revendications précédentes, comprenant en outre :
- une valve d'isolement (56) pour fermer le raccordement d'alimentation.

7. Module d'alimentation en eau (10, 10') selon l'une des revendications précédentes, comprenant en outre :
- un élément porteur (12, 50),
dans lequel des composants du module d'alimentation en eau sont fixés sur l'élément porteur,
dans lequel l'élément porteur est réalisé pour être fixé sur le moyen de transport (100).

8. Système d'installation pour un moyen de transport, comprenant :
- un module d'alimentation en eau (10, 10') selon l'une des revendications 1 à 7, et
au moins deux robinets d'eau (30, 30') de conception différente,
dans lequel chacun des au moins deux robinets d'eau est réalisé pour être relié au raccordement de sortie et au raccordement de commande.

9. Système d'installation pour un moyen de transport selon la revendication 8 avec un module d'alimentation en eau (10, 10') selon l'une des revendications 1 à 7,
dans lequel chacun des au moins deux robinets d'eau (30, 30') de conception différente présente un raccordement standard de robinet d'eau (32, 32'),
dans lequel le raccordement standard de robinet d'eau est réalisé pour relier le robinet d'eau au raccordement standard modulaire.

10. Procédé d'installation d'un module d'alimentation en eau (10, 10') dans un moyen de transport, comportant les étapes de :
- fixer du module d'alimentation en eau (10, 10') réalisé sous la forme d'un bloc sur le moyen de transport ;
- raccorder du raccordement d'alimentation à la conduite d'alimentation ;
- raccorder du robinet d'eau sur le raccordement de fourniture ;
- raccorder du moyen d'actionnement du robinet d'eau sur un raccordement de commande ;
dans lequel le raccordement du robinet d'eau sur le raccordement de fourniture et le raccordement du moyen d'actionnement sur le raccordement de commande a lieu en une étape unique en raccordant le robinet d'eau sur un raccordement standard modulaire.

11. Procédé selon la revendication 10, la fixation du module d'alimentation en eau (10, 10') sur le moyen de transport comprenant une fixation d'un élément porteur du module d'alimentation en eau sur le moyen de transport.

12. Utilisation d'un module d'alimentation en eau (10, 10') selon l'une des revendications 1 à 7 dans un moyen de transport (100).

13. Moyen de transport (100) avec un module d'alimentation en eau (10, 10') selon l'une des revendications 1 à 7.
